# EUROPÄISCHE PATENTSCHRIFT

(11) **EP 2 535 217 B1**
(45) Veröffentlichungstag und Bekanntmachung des Hinweises auf die Patenterteilung: **01.11.2017**
(21) Anmeldenummer: 12172050.2
(22) Anmeldetag: 14.06.2012
(51) Int. Cl.: B60J 7/06, B60J 7/08

(54) **Dachplane für Nutzfahrzeuge**
Canopy for trucks
Capote pour camion

(30) Priorität: 14.06.2011 DE 202011050437 U
(43) Veröffentlichungstag der Anmeldung: 19.12.2012
(73) Patentinhaber: Kögel Trailer GmbH & Co. KG, 89349 Burtenbach (DE)
(72) Erfinder: Kreis, Reinhard, 89356 Konzenberg (DE)
(74) Vertreter: Kilchert, Jochen

(56) Entgegenhaltungen:
- DE-A1- 10 154 371
- DE-A1- 19 756 865
- DE-C1- 10 124 283
- DE-T2- 60 130 939
- DE-T2- 68 905 328
- DE-U1-202007 010 786
- DE-U1-202008 008 651
- DE-U1-202008 012 986

## Beschreibung

Die Erfindung betrifft eine Dachhaut für einen Fahrzeugaufbau mit den Merkmalen im Oberbegriff des Hauptanspruchs, wie aus Dokument DE 601 30 939 T2 bekannt. Aus der DE 197 56 865 A1 ist ein Nutzfahrzeugaufbau mit einer Dachöffnung und einem Schiebeverdeck mit einer flexiblen Dachhaut bzw. Dachplane bekannt. Ferner ist eine Dachaussteifung vorhanden, die getrennt von der Dachplane angeordnet ist und die aus rautenförmig verspannten Seilen oder Ketten besteht, die mit ihren Enden an einer Dachrahmenkonstruktion befestigt ist. Die Spannseile sind mit ihren Enden an Eckrungen oder Eckpfosten des Fahrzeugaufbaus befestigt und sind über Ösen an verfahrbaren Dachspriegeln geführt. Beim Öffnen des Schiebeverdecks falten sich die flexiblen Spannseile unabhängig von der Dachplane und hängen nach unten.

Die DE 101 24 283 C1 zeigt ein ähnliches Schiebeverdeck mit einer getrennt von der Dachplane angeordneten Dachaussteifung aus Spannseilen, wobei deren Verlegung in Rautenform anders als bei der vorgenannten Druckschrift ausgebildet ist.

Die DE 101 54 371 A1 offenbart ebenfalls einen ähnlichen Fahrzeugaufbau mit einer Dachplane und einer hiervon getrennten Dachaussteifung mit Spannseilen in einer rautenförmigen Verlegung, die endseitig direkt mit dem Fahrzeugaufbau verbunden sind, wobei unter der Dachplane in der Dachöffnung zusätzlich Längs- und Querholme zur Planenabstützung vorhanden sind.

Es ist Aufgabe der vorliegenden Erfindung, eine bessere Dachhaut für einen Fahrzeugaufbau anzugeben.

Die Erfindung löst diese Aufgabe mit den Merkmalen im Hauptanspruch.

Die Dachhaut ist mit den mehreren gurtartigen Versteifungselementen stabilisiert und gegen Zugkräfte ausgesteift. Die Dachhaut selbst kann somit mit ihren gurtartigen Versteifungselementen in besonders günstiger Weise die im Dachbereich auftretenden und auf den Fahrzeugaufbau einwirkenden Kräfte aufnehmen und den Fahrzeugaufbau gegen unerwünschte Verformungen im Dachbereich stabilisieren. Ein Gurt kann hohe Zugkräfte aufnehmen und beansprucht durch seine flache Bauweise nur wenig Platz. Außerdem ist er kostengünstig.

Die in geeigneter Weise verlegten mehreren gurtartige(n) Versteifungselement(e) bilden eine Dachaussteifung, die mit der Dachhaut fest verbunden und in die Dachhaut integriert ist. Eine separate Dachaussteifung mit Spannseilen und deren endseitiger Befestigung an einem Fahrzeugaufbau ist entbehrlich. Dies verringert den Bau- und Kostenaufwand gegenüber vorbekannten Dachabdeckungen und Dachaussteifungen. Insbesondere kann der Montageaufwand verringert werden. Außerdem bewegen sich das oder die Versteifungselement(e) gemeinsam mit der Dachhaut bei einer Ausbildung als Schiebeverdeck und hängen nicht lose in den Laderaum.

Die durch mehrere in geeigneter Weise verlegte gurtartige Versteifungselemente stabilisierte und gegen Zugkräfte ausgesteifte Dachhaut oder Dachplane kann ihre Flexibilität und insbesondere Faltfähigkeit behalten. Somit kann bedarfsweise ein Verschiebeverdeck gebildet werden. Die Dachhaut kann aber auch stationär angeordnet werden. Ferner kann es zur Kraftübertragung genügen, die Dachhaut an einer Tragkonstruktion im Dachbereich zu befestigen, wobei sie z.B. an stationären oder beweglichen Querspriegeln in geeigneter Weise fixiert wird. Eine separate Befestigung des oder der gurtartigen Versteifungselemente an der Tragkonstruktion oder an anderer Stelle des Fahrzeugaufbaus ist entbehrlich. Für eine Kräfteübertragung ist es außerdem vorteilhaft, eine flächige Verbindung zwischen dem oder den gurtartigen Versteifungselement(en) und der Dachhaut zu schaffen, z.B. über eine Schweißverbindung. Diese kann unmittelbar oder mittelbar über eine den Gurt zumindest bereichsweise umgebende Hülle erfolgen.

Zur Bildung einer Dachaussteifung können ein oder mehrere gurtartige(s) Versteifungselement(e) in verschiedener Weise verlegt und an den Stoßstellen miteinander verbunden werden. Insbesondere ist eine fachwerkartige Anordnung von Vorteil, welche besonders gut zur Aufnahme von äußeren Kräften geeignet ist, die aus verschiedenen Richtungen auf den Dachbereich des Fahrzeugaufbaus und auf die Dachhaut einwirken. Vorteilhafterweise kann ein solches Fachwerk einen randseitig angeordneten und bevorzugt umlaufenden Versteifungsrahmen haben. Alternativ oder zusätzlich können ein oder mehrere Querversteifungen und/oder Schrägversteifungen vorhanden sein.

Die beanspruchte Dachhaut ist für unterschiedliche Arten von Fahrzeugaufbauten geeignet. Ein bevorzugter Einsatzbereich sind Curtainsider. Außerdem können die Fahrzeuge unterschiedlicher Natur sein, wobei sie bevorzugt als Anhänger ausgebildet sind.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen
- Figur 1:: ein Nutzfahrzeug mit einem Fahrzeugaufbau und einer Dachhaut in Seitenansicht,
- Figur 2 bis 4:: mehrere Varianten einer Dachhaut in Draufsicht und
- Figur 5:: eine abgebrochene Schnittdarstellung einer Verbindungsstelle von Dachhaut und einer Tragkonstruktion.

Die Erfindung betrifft eine Dachhaut (6) für ein Nutzfahrzeug (1) und ein damit ausgerüstetes Nutzfahrzeug (1).

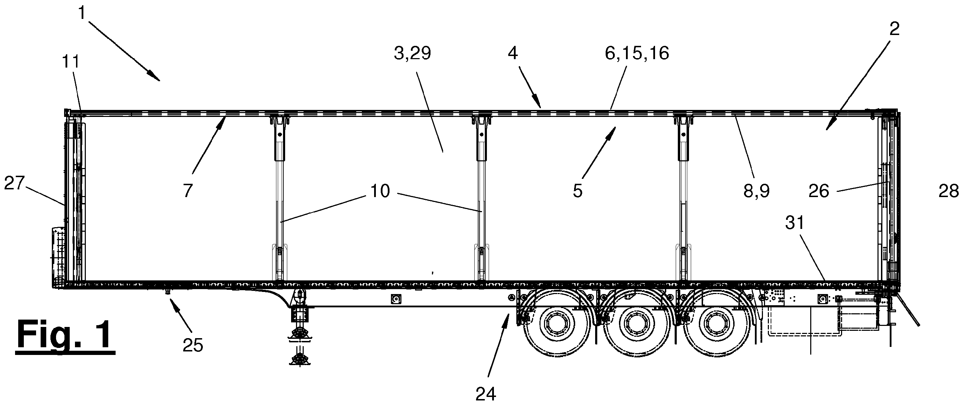

Figur 1 zeigt in Seitenansicht ein Nutzfahrzeug (1), insbesondere ein Landfahrzeug, das hier z.B. als Anhänger, insbesondere als Sattelauflieger ausgebildet ist. Der Anhänger besitzt eine Zugeinrichtung (25) z.B. in Form der gezeigten Sattelkupplung oder alternativ einer starren oder beweglichen Deichsel. Bei dem Fahrzeug kann es sich alternativ um einen Lastkraftwagen oder um ein beliebiges anderes Nutzfahrzeug handeln. Die nachstehenden Erläuterungen gelten hierfür entsprechend.

Der Sattelauflieger (1) besitzt ein Fahrgestell (24) mit ein oder mehreren Achsen, Federungen und den anderen üblichen Fahrgestellteilen. Das Fahrgestell (24) trägt in einem festen oder lösbaren Verbund einen Nutzfahrzeugaufbau (2). Dies kann auch ein vom Fahrgestell (24) abnehmbarer Wechselaufbau sein.

Der Nutzfahrzeugaufbau (2) kann eine Ladefläche (31) und ggfs. ein Heckportal (26), eine steife und/oder flexible Seitenwandung (3) und ein Dach (4) mit einer Dachöffnung (5) aufweisen, die mittels einer Dachhaut (6) verschlossen werden kann. Im der gezeigten Ausführungsbeispiel ist der Nutzfahrzeugaufbau (2) als Curtainsider ausgebildet, wobei die Seitenwandung (3) eine starre Frontwand (27), eine ggf. mit Türen, Rolltor oder dgl. versehene Heckwand (28) und verschiebbare Seitenplanen (29) nebst Seitenrungen (10) aufweist. Alternativ kann die Seitenwandung (3) an allen Seiten steife Wände und eine Dachöffnung (5) aufweisen. Ein solcher Fahrzeugaufbau (2) kann als Mulde, als Open-Top-Container, als Kofferaufbau oder dgl. ausgebildet sein. Ein Fahrzeugaufbau (2) kann auch ein Planengestell aufweisen.

Der Nutzfahrzeugaufbau (2) besitzt am Dach (4) eine Tragkonstruktion (7) mit z.B. zwei parallelen Längsträgern (8,9) und zwei front- und heckseitigen Querträgern (11). Die Tragkonstruktion oder Dachrahmenkonstruktion (7) kann in die Seitenwandung (3) integriert sein. Sie kann alternativ von der Seitenwandung (3) gelöst sein. Sie kann außerdem höhenverstellbar sein.

Der Nutzfahrzeugaufbau (2) besitzt am Dach (4) eine Tragkonstruktion (7) mit mehreren Längs- und Querträgern (8,9,10,11). Die Tragkonstruktion oder Dachrahmenkonstruktion (7) kann in die Seitenwandung (3) integriert sein. Sie kann alternativ von der Seitenwandung (3) gelöst sein. Außerdem kann die Tragkonstruktion (7) höhenverstellbar sein.

Die Tragkonstruktion (7) besteht z.B. aus zwei parallelen und oberhalb der Seitenwandung (3) angeordneten Längsträgern (8,9) und mindestens zwei front- und heckseitigen Querträgern (11). Diese können stationär angeordnet und mit den Längsträgern (8,9) starr verbunden sein. Alternativ ist es bei der Bildung eines Schiebeverdecks möglich, den heckseitigen Querträger (11) beweglich und insbesondere entlang der Längsträger (8,9) verfahrbar auszubilden. Außerdem können mehrere die Dachöffnung (5) überspannende Querträger (12) vorhanden sein, die Querspriegel bilden, um die aufliegende Dachhaut (6) abzustützen. Die Querspriegel (12) können starr oder beweglich, insbesondere verfahrbar, mit den Längsträgern (8,9) verbunden sein.

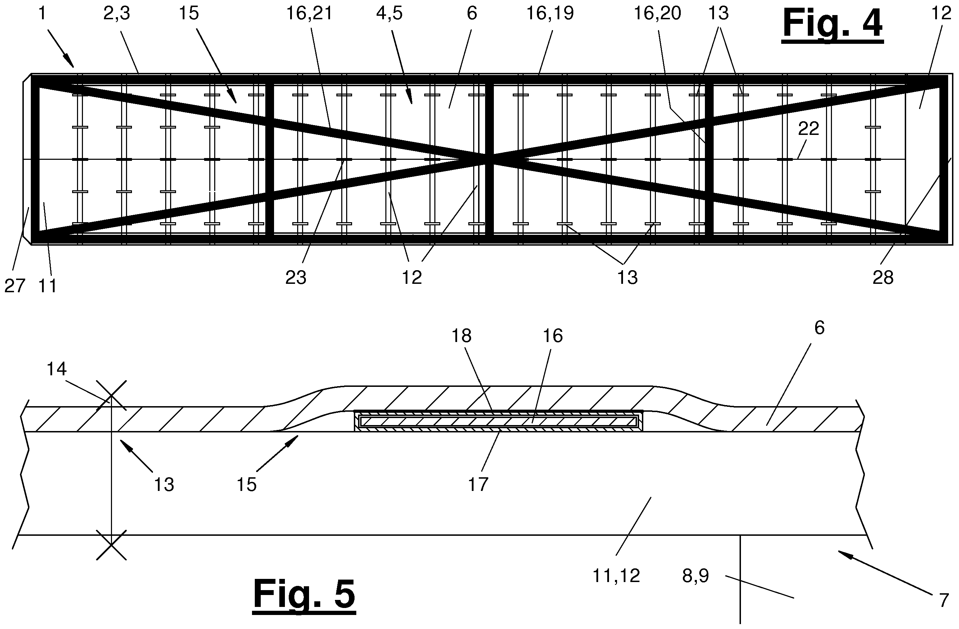

Die Dachhaut (6) liegt auf der Tragkonstruktion (7) auf und wird von ihr abgestützt. Sie kann in geeigneter Weise mit der Tragkonstruktion (7) an mehreren Verbindungsstellen (13) verbunden sein. Insbesondere können an den Enden der Querträger (11,12) Verbindungsstellen (13) vorhanden sein. Diese besitzen geeignete Verbindungselemente (14), die z.B. als Niete, Schrauben oder dgl. ausgebildet sind. Figur 5 verdeutlicht beispielhaft diese Ausbildung.

Die Dachhaut (6) weist mindestens ein gurtartiges Versteifungselement (16) auf, das an der Dachhaut (6) befestigt ist. Ein oder mehrere derartige Versteifungselemente (16) können eine Dachaussteifung (15) bilden. Die Dachaussteifung (15) kann die Dachöffnung (5) überspannen und kann die im Dachbereich (4) auf den Fahrzeugaufbau (2) einwirkenden Kräfte aufnehmen und abstützen, wobei unerwünschte Aufbauverformungen im Dachbereich vermieden oder zumindest auf ein zulässiges Maß reduziert werden können.

Die Dachhaut (6) ist biegeelastisch ausgebildet und kann insbesondere gefaltet werden. Desgleichen sind auch die ein oder mehreren gurtartigen Versteifungselemente (16) biegeelastisch ausgebildet und können der Verformung der Dachhaut (6) folgen. Mit der Dachhaut (6) kann insbesondere ein Schiebeverdeck gebildet werden, wobei an der Tragkonstruktion (7) entsprechende Vorrichtungen zur Unterstützung der Faltenbildung und zur Führung der Dachhautfalten beim Aufschieben des Verdecks vorhanden sein können. Hierüber werden auch die mit der Dachhaut (6) verbundenen Versteifungselemente (16) geführt.

Die Dachhaut (6) kann als Plane aus Kunststoff oder aus einem Gewebe oder aus einem sonstigen geeigneten Material ausgebildet sein. In eine Kunststoffbahn können auch zur internen Stabilisierung Fasern oder andere kleine Stabilisierungselemente angeordnet sein. Die Dachhaut (6) kann wasserdicht ausgebildet sein und kann aus einer oder mehreren Lage(n) bestehen. Sie kann sich randseitig bis zu den Aufbaurändern oder ggf. auch über diese hinaus erstrecken und aus der üblichen horizontalen Lage nach unten umgeschlagen sein.

Das ein- oder mehrfach vorhandene gurtartige Versteifungselement (16) ist zugfest ausgebildet. Es ist bevorzugt an der Innenseite der Dachplane (6) angeordnet und befestigt. Figur 5 zeigt dies beispielhaft. Das Versteifungselement (16) kann aus einem einlagigen oder mehrlagigen Gurt bestehen, der in geeigneter Weise zur Erzielung der Biegeelastizität und gleichzeitigen Zugfestigkeit ausgebildet ist. Der Gurt kann aus einer zugfesten Folie und einem entsprechenden Kunststoffmaterial bestehen. Er kann alternativ oder zusätzlich ein Gewebe oder ein Geflecht aufweisen.

Das ein- oder mehrfach vorhandene gurtartige Versteifungselement (16) kann direkt oder mittelbar mit der Dachhaut bzw. der Dachplane (6) verbunden sein. Die Verbindung (18) kann flächig sein und kann z.B. als Schweißverbindung ausgeführt sein. Ein Versteifungselement (16) kann z.B. gemäß Figur 5 auch in einer Hülle (17) angeordnet sein, welche den Gurt (16) am gesamten Umfang oder alternativ stellenweise umgibt. Die Verbindung (18) kann zwischen der Hülle (17) und der Dachhaut (6) bestehen und kann ebenfalls als flächige Schweißverbindung oder sonstige geeignete Verbindung ausgeführt sein, welche die auftretenden Kräfte in geeigneter Weise überträgt.

Wie Figur 5 verdeutlicht, kann das Versteifungselement (16) als flacher Gurt ausgebildet sein, dessen längs der Hauptebene der Dachhaut (6) ausgerichtete Breite gleich groß oder größer als die Gurthöhe ist. Der Gurt (16) kann z.B. einen im wesentlichen rechteckigen Querschnitt aufweisen. Er kann ebene und glatte oder alternativ profilierte Außenflächen aufweisen. In der gezeigten Ausführungsform ist er gerade ausgerichtet. Er kann alternativ eine andere Formgebung, z.B. eine leichte Wölbung, besitzen.

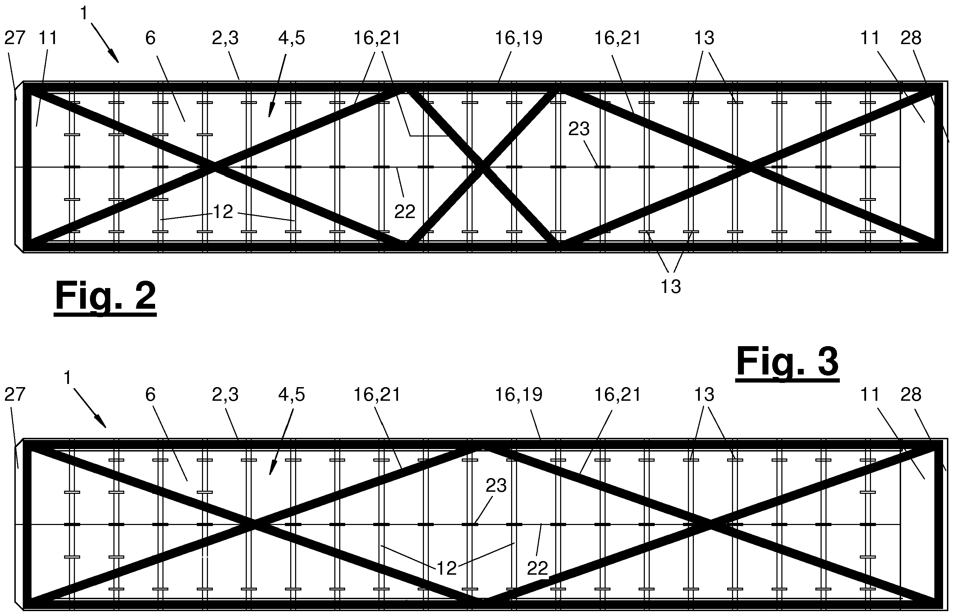

Ein oder mehrere gurtartige Versteifungselement(e) (16) können eine fachwerkartige Dachaussteifung (15) bilden, zu der in Figur 2, 3 und 4 verschiedene Ausführungsbeispiele angegeben sind. Wenn mehrere gurtartige Versteifungselemente (16) vorhanden sind, können diese an den Stoßstellen untereinander kraftübertragend verbunden sein. Die Verbindung kann unmittelbar oder ggf. unter Zwischenlage der besagten Hülle (17) bestehen. Die Stoßstellen können stumpfe Stöße, Eckstöße oder Kreuzungsstellen sein. An einer Stoßstelle können die beteiligten gurtartigen Versteifungselemente (16) übereinander und einander überlappend angeordnet sein. Eine kraftübertragende Verbindung kann durch mechanisch, z.B. durch Vernähen, und/oder stofflich, z.B. durch Verschweißen oder Verkleben, erfolgen.

Die fachwerkartige Dachaussteifung (15) kann unterschiedliche Gestaltungsformen haben. Insbesondere können ein oder mehrere gurtartige Versteifungselement(e) (16) einen Versteifungsrahmen (19) bilden, der bevorzugt randseitig an der Dachhaut (6) angeordnet ist und am Dachrand umläuft. Dies kann der in den Zeichnungen dargestellte rechteckige Rahmen sein.

Alternativ oder zusätzlich können ein oder mehrere gurtartige Versteifungselement(e) (16) quer zur Längsachse (22) der Dachhaut (6) angeordnet sein und eine Querversteifung (20) bilden. Ferner können alternativ oder zusätzlich ein oder mehrere gurtartige Versteifungselement(e) (16) schräg zur Längsachse (22) angeordnet sein und eine Schrägversteifung (21) bilden. Die verschiedenen Versteifungen (19,20,21) können in unterschiedlicher Weise miteinander kombiniert werden.

In der Variante von Figur 2 wird der Versteifungsrahmen (19) mit drei gekreuzten Schrägversteifungen (21) kombiniert, welche jeweils aneinander anschließen und eine Rautenversteifung mit unterschiedlich großen Rautenfeldern bilden. In der Variante von Figur 3 sind innerhalb des umfangseitigen Versteifungsrahmens (19) zwei gekreuzte Schrägversteifungen (21) angeordnet, die miteinander und mit dem Versteifungsrahmen (19) jeweils etwa im mittleren Dachbereich zusammenstoßen und verbunden sind. Figur 4 zeigt eine Variante, bei der im außenseitigen Versteifungsrahmen (19) eine einzelne gekreuzte und von den Rahmenecken jeweils ausgehende Schrägversteifung (21) angeordnet ist, die mit mehreren, z.B. drei Querversteifungen (20), ergänzt ist. Hierdurch ergeben sich mehrere Kreuzungsstellen der verschiedenen gurtartigen Versteifungselemente (16), an denen die Gurte (16) jeweils miteinander verbunden sind. Daneben sind weitere Gestaltungsvarianten der fachwerkartigen Dachaussteifung (15) möglich.

In Figur 2, 3 und 4 ist außerdem die Lage der jeweils zwei randseitigen Verbindungsstellen (13) zwischen der Dachhaut (6) und den Querträgern (11,12) dargestellt. Ferner sind ggf. vorhandene zusätzliche Gurtlaschen (23) dargestellt, mit denen die Dachhaut (6) ggf. im Mittelbereich an den Querträgern (12) angehängt und gegen Abheben gesichert ist.

Abwandlungen der gezeigten und beschriebenen Ausführungsformen sind in verschiedener Weise möglich. Insbesondere können die Merkmale der vorbeschriebenen Ausführungsbeispiele untereinander vertauscht oder miteinander kombiniert werden. In der gezeigten Ausführungsform sind die Verbindungsstellen (13) zwischen Dachhaut (6) und Querträger (11,12) in den gurtfreien Bereichen angeordnet. Alternativ oder zusätzlich können sich ein oder mehrere Verbindungselement(e) (14) auch durch einen Gurt (16) hindurch erstrecken und diesen ebenfalls fixieren. In weiterer Abwandlung können ein oder mehrere gurtartige Versteifungselement(e) (16) in die Dachhaut (6) integriert und innerhalb von deren ggf. mehrlagiger Plane angeordnet sein. In weiterer Abwandlung können ein oder mehrere gurtartige Versteifungselement(e) (16) auch an der Außenseite der Dachhaut (6) angeordnet sein.

### BEZUGSZEICHENLISTE

- 1: Nutzfahrzeug, Anhänger, Sattelauflieger
- 2: Fahrzeugaufbau, Nutzfahrzeugaufbau
- 3: Seitenwandung von Aufbau
- 4: Dach
- 5: Dachöffnung
- 6: Dachhaut, Dachplane
- 7: Tragkonstruktion
- 8: Längsträger, Dachholm
- 9: Längsträger, Dachholm
- 10: Runge
- 11: Querträger endseitig fest
- 12: Querträger endseitig beweglich, Querspriegel
- 13: Verbindungsstelle
- 14: Verbindungselement, Niet
- 15: Dachaussteifung, Gurtaussteifung
- 16: Versteifungselement, Gurt
- 17: Hülle
- 18: Verbindung, Schweißverbindung
- 19: Versteifungsrahmen
- 20: Querversteifung
- 21: Schrägversteifung
- 22: Längsachse
- 23: Haltelasche
- 24: Fahrgestell
- 25: Zugeinrichtung, Deichsel, Sattelkupplung
- 26: Heckportal
- 27: Frontwand
- 28: Heckwand
- 29: Seitenplane
- 30: Seitenrunge
- 31: Ladefläche

## Patentansprüche

1. Dachhaut für Nutzfahrzeuge (1) mit einem im Dachbereich offenen Fahrzeugaufbau (2),
wobei an der Dachhaut (6) mehrere gurtartige zugfeste und biegeelastische Versteifungselemente (16) kraftübertragend befestigt sind, welche die Dachhaut (6) stabilisieren und gegen Zugkräfte aussteifen, **dadurch gekennzeichnet, dass** die gurtartigenVersteifungselemente (16) schräg zur Längsachse (22) der Dachhaut (6) angeordnet sind und eine Schrägversteifung (21) bilden, und dass die mehreren gurtartigen Versteifungselemente (16) untereinander, insbesondere an Stoßstellen, kraftübertragend verbunden sind.

2. Dachhaut nach Anspruch 1,
**dadurch gekennzeichnet, dass** die Dachhaut (6) als bevorzugt biegeelastische, insbesondere faltbare, Plane aus Kunststoff oder aus einem Gewebe ausgebildet ist.

3. Dachhaut nach Anspruch 1 oder 2 ,
**dadurch gekennzeichnet, dass** ein gurtartiges Versteifungselement (16) direkt an der Dachhaut (6) befestigt ist oder in einer Hülle (17) angeordnet und die Hülle (17) an der Dachhaut (6) befestigt ist.

4. Dachhaut nach Anspruch 1, 2 oder 3,
**dadurch gekennzeichnet, dass** die Verbindung (18) zwischen der Dachplane (6) und dem gurtartigen Versteifungselement (16) oder einer Hülle (17) als Schweißverbindung ausgebildet ist.

5. Dachhaut nach einem der vorhergehenden Ansprüche,
**dadurch gekennzeichnet, dass** ein Versteifungselement (16) als flacher Gurt ausgebildet ist und ein Gewebe oder Geflecht aufweist, wobei die längs der Hauptebene der Dachhaut (6) ausgerichtete Breite des Gurts größer als dessen Höhe ist.

6. Dachhaut nach einem der vorhergehenden Ansprüche,
**dadurch gekennzeichnet, dass** mehrere gurtartige Versteifungselemente (16) eine fachwerkartige Dachaussteifung (15) bilden.

7. Dachhaut nach einem der vorhergehenden Ansprüche,
**dadurch gekennzeichnet, dass** ein oder mehrere gurtartige Versteifungselemente (16) einen randseitig an der Dachhaut (6) angeordneten und bevorzugt umlaufenden Versteifungsrahmen (19) bilden.

8. Dachhaut nach einem der vorhergehenden Ansprüche,
**dadurch gekennzeichnet, dass** ein oder mehrere gurtartige Versteifungselemente (16) quer zur Längsachse (22) der Dachhaut (6) angeordnet sind und eine Querversteifung (20) bilden.

9. Dachhaut nach einem der vorhergehenden Ansprüche,
**dadurch gekennzeichnet, dass** ein Versteifungsrahmen (19) mit einer Querversteifung (20) und/oder mit einer Schrägversteifung (21) verbunden ist.

10. Dachhaut nach einem der vorhergehenden Ansprüche,
**dadurch gekennzeichnet, dass** die Dachhaut (6) zwei oder mehr, insbesondere randseitige, vorzugsweise in gurtfreien Bereichen angeordnete, Verbindungsstellen (13) zu einer Tragkonstruktion (7) eines Fahrzeugaufbaus (2), aufweist.

11. Nutzfahrzeug, insbesondere Anhänger, mit einem im Dachbereich offenen (5) Fahrzeugaufbau (2) und einer Dachhaut (6) zum Verschließen der Dachöffnung (5),
**dadurch gekennzeichnet, dass** die Dachhaut (6) nach mindestens einem der Ansprüche 1 bis 10 ausgebildet ist, wobei der Fahrzeugaufbau (2) eine Tragkonstruktion (7) im Dachbereich mit Längs- und Querträgern (8,9,11,12) aufweist.

12. Nutzfahrzeug nach Anspruch 11,
**dadurch gekennzeichnet, dass** das Nutzfahrzeug (1) an der Dachöffnung (5) ein Schiebeverdeck mit einer faltbaren Dachhaut (6) aufweist.

13. Nutzfahrzeug nach Anspruch 11 oder 12,
**dadurch gekennzeichnet, dass** der Fahrzeugaufbau (2) eine Ladefläche (31) mit einer steifen und/oder flexiblen Seitenwandung (3) aufweist.

## Claims

1. A canopy for trucks (1) with a vehicle body (2) open in the roof area,
wherein a plurality of belt-like, high tensile strength and elastically flexible stiffening elements (16) is attached to the canopy (6) in force-transmitting manner, stabilising the canopy (6) and bracing it against tensile forces, **characterised in that** the plurality of belt-like stiffening elements (16) is arranged at an angle to the longitudinal axis (22) of the canopy (6) and forms a diagonal bracing element (21), and that the plurality of belt-like stiffening elements (16) are connected to each other in force-transmitting manner, particularly at joining points.

2. The canopy according to claim 1,
**characterised in that** the canopy (6) is designed as a preferably elastically flexible, particularly foldable tarpaulin made from plastic or a fabric.

3. The canopy according to claim 1 or 2,
**characterised in that** a belt-like stiffening element (16) is fastened directly to the canopy (6) or is arranged in a sheath (17) and the sheath (17) is fastened to the canopy (6).

4. The canopy according to claim 1, 2 or 3,
**characterised in that** the connection (18) between the roof sheet (6) and the belt-like stiffening element (16) or a sheath (17) has the form of a welded joint.

5. The canopy according to any one of the preceding claims,
**characterised in that** a stiffening element (16) is designed as a flat belt and comprises a woven or braided fabric, wherein the width of the belt aligned along the main plane of the canopy (6) is greater than the height thereof.

6. The canopy according to any one of the preceding claims,
**characterised in that** a plurality of belt-like stiffening elements (16) forms a truss-like roof reinforcement (15).

7. The canopy according to one of the preceding claims,
**characterised in that** one or more belt-like reinforcing elements (16) form a reinforcing frame (19) on the edge of the canopy (6) and preferably around the periphery thereof.

8. The canopy according to any one of the preceding claims,
**characterised in that** one or more belt-like reinforcing elements (16) are arranged transversely to the longitudinal axis (22) of the canopy (6) and form a transverse reinforcement (21).

9. The canopy according to any one of the preceding claims,
**characterised in that** a stiffening frame (19) is connected to a transverse reinforcement (20) and/or a diagonal bracing element (21).

10. The canopy according to any one of the preceding claims,
**characterised in that** the canopy (6) has two or more joining points (13) with a supporting structure (7) of a vehicle body (2) disposed particularly on the edges, preferably in areas without belts.

11. A truck, particularly a trailer, with a vehicle body (2) open in the roof area (5) and a canopy (6) for closing the roof opening (5),
**characterised in that** the canopy (6) is constructed according to at least one of claims 1 to 10, wherein the vehicle body (2) has a supporting structure (7) in the roof area with longitudinal and transverse supports (8, 9, 11, 12).

12. The truck according to claim 11,
**characterised in that** the truck (1) has a sliding roof with a foldable canopy (6) in the roof opening (5).

13. The truck according to claim 11 or 12,
**characterised in that** the vehicle body (2) has a loading surface (31) with a rigid and/or flexible side wall (3).

## Revendications

1. Capote pour camions (1) avec une carrosserie (2) ouverte dans la zone de toit,
plusieurs éléments raidisseurs (16) de type sangle, résistants à la traction et élastiques en flexion étant fixés par transmission de force à la capote (6), lesquels stabilisent la capote (6) et raidissent contre les forces de traction, **caractérisée en ce que** plusieurs éléments raidisseurs de type sangle (16) sont disposés en diagonale par rapport à l'axe longitudinal (22) de la capote (6) et forment un renforcement oblique (21) et **en ce que** plusieurs éléments raidisseurs de type sangle (16) sont reliés entre eux par transmission de force, notamment à des points de transition.

2. Capote selon la revendication 1,
**caractérisée en ce que** la capote (6) est constituée de préférence d'une bâche en plastique élastique en flexion, notamment pliable ou d'un tissu.

3. Capote selon la revendication 1 ou 2,
**caractérisée en ce qu'**un élément raidisseur de type sangle (16) est fixé directement à la capote (6) ou est disposé dans une enveloppe (17) et l'enveloppe (17) est fixée à la capote (6).

4. Capote selon la revendication 1, 2 ou 3,
**caractérisée en ce que** la liaison (18) entre la capote (6) et l'élément raidisseur de type sangle (16) ou une enveloppe (17) est constituée sous la forme d'une liaison soudée.

5. Capote selon l'une quelconque des revendications précédentes,
**caractérisée en ce qu'**un élément raidisseur (16) est constitué comme une sangle plate et comporte un produit tissé ou tressé, la largeur de la sangle orientée le long du plan principal de la capote (6) étant plus grande que sa hauteur.

6. Capote selon l'une quelconque des revendications précédentes,
**caractérisée en ce que** plusieurs éléments raidisseurs de type sangle (16) forment une rigidification de toit de type treillis (15).

7. Capote selon l'une quelconque des revendications précédentes,
**caractérisée en ce qu'**un ou plusieurs éléments raidisseurs de type sangle (16) forment un cadre de rigidification (19) disposé au bord sur la capote (6) et de préférence périphérique.

8. Capote selon l'une quelconque des revendications précédentes,
**caractérisée en ce qu'**un ou plusieurs éléments raidisseurs de type sangle (16) sont disposés en diagonale par rapport à l'axe longitudinal (22) de la capote (6) et forment une rigidification transversale (20) .

9. Capote selon l'une quelconque des revendications précédentes,
**caractérisée en ce qu'**un cadre de rigidification (19) est relié à une rigidification transversale (20) et/ou à une rigidification oblique (21).

10. Capote selon l'une quelconque des revendications précédentes,
**caractérisée en ce que** la capote (6) comporte deux points de liaison (13) ou plus à une structure portante (7) d'une carrosserie de véhicule (2), notamment disposés sur le bord, de préférence dans les zones sans sangle.

11. Camion, notamment remorque, avec une carrosserie de véhicule (2) ouverte dans la zone de toit (5) et une capote (6) pour fermer l'ouverture de toit (5),
**caractérisé en ce que** la capote (6) est au moins constituée selon l'une quelconque des revendications 1 à 10, la carrosserie de véhicule (2) comportant une structure portante (7) dans la zone de toit avec des longerons et des traverses (8, 9, 11, 12).

12. Camion selon la revendication 11,
**caractérisé en ce que** le camion (1) comporte sur l'ouverture de toit (5) une couverture coulissante avec une capote pliable (6).

13. Camion selon la revendication 11 ou 12,
**caractérisé en ce que** la carrosserie de véhicule (2) comporte une surface de chargement (31) avec un cloisonnement latéral (3) rigide et/ou flexible.
